# FASCICULE DE BREVET EUROPEEN

(11) **EP 0 921 058 B1**
(45) Date de publication et mention de la délivrance du brevet: **10.07.2002**
(21) Numéro de dépôt: 98490033.2
(22) Date de dépôt: 03.12.1998
(51) Int. Cl.: B62D 65/00, B09B 5/00

(54) **Procédé de recyclage des véhicules automobiles hors d'usage et installation de recyclage mettant en oeuvre le procédé**
Verfahren zur Wiederaufbereitung für nicht mehr gebrauchsfähige Kraftfahrzeuge und Wiederaufbereitungsanlage zur Durchführung des Verfahrens
Recycling process for out-of-use motor vehicles and recycling installation involving such a process

(30) Priorité: 04.12.1997 FR 9715657
(43) Date de publication de la demande: 09.06.1999
(73) Titulaire: Cibie Recyclage, S.A., 59520 Marquette lez Lille (FR)
(72) Inventeur: Six, Benoît, 59166 Bousbecque (FR)
(74) Mandataire: Ecrepont, Robert

(56) Documents cités:
- EP-A- 0 556 172
- EP-A- 0 602 556
- DE-A- 3 640 501

## Description

L'invention se rapporte à un procédé de recyclage des véhicules automobiles hors d'usage

Elle se rapporte également à l'installation de recyclage des véhicules automobiles hors d'usage mettant en oeuvre le procédé.

Les véhicules hors d'usage, dont il est question, sont des véhicules retirés de la circulation pour différentes raisons qui ne seront pas évoquées ci-après.

Ces véhicules sont pris en charge par des entreprises de recyclage et sont amenés dans des installations dites de recyclage.

Ces véhicules qui, pendant leur utilisation, sont identifiables grâce à leurs plaques minéralogiques, perdent toute identité lorsqu'ils sont pris en charge par la société chargée de les recycler.

Cette perte d'identité génère des inconvénients.

En effet, il n'est pas rare qu'un véhicule ou une partie dudit véhicule en principe détruit réapparaisse abusivement sur le marché.

Pour le recyclage, ces véhicules doivent subir des opérations qui, au moins pour certaines d'entre elles, doivent être réalisées chronologiquement.

En raison de l'état de ces véhicules, de leur nombre et du travail à réaliser par poste, il n'est pas rare qu'un véhicule échappe à une opération.

Lorsque des pièces récupérables n'ont pas été prélevées, cela peut représenter une perte financière ou un danger lorsque le véhicule n'a pas été dépollué, c'est à dire lorsque les fluides résiduels qu'il contient n'ont pas été éliminés avant que la carcasse ne soit broyée.

Comme danger, on peut, par exemple, envisager qu'un réservoir contenant encore de l'essence explose.

Un procédé tel que décrit dans le préambule de la présente revendication 1 est connu du document EP-0 602 556-A.

Un des résultats que l'invention vise à obtenir est un procédé et une installation de recyclage qui remédient aux inconvénients précités.

A cet effet, l'invention a pour objet un tel procédé de recyclage des véhicules automobiles hors d'usage dans une installation comprenant divers postes de travail effectuant des tâches différentes et, pour certaines, nécessitant un ordre de passage chronologique, ce procédé étant notamment caractérisé en ce que :
- préalablement à la prise en charge des véhicules en divers endroits, on crée au moins un moyen matériel d'identification du véhicule, ce moyen d'identification comprenant des moyens de fixation sur le véhicule,
- en concomitance, on associe au moins indirectement à ce moyen d'identification, une mémoire répertoriant des données, d'une part, sur le véhicule et, d'autre part, sur les opérations à effectuer chronologiquement pour le recyclage,
- lors de la prise en charge d'un véhicule, d'une part, on fixe le ou les moyens d'identification sur le véhicule et, d'autre part, on incrémente la mémoire associée pour indiquer l'étape suivante,
- à chaque poste de travail et avant chaque opération, on lit le moyen d'identification,
- on lit la mémoire associée pour identifier l'opération de recyclage prévue,
- on vérifie que l'opération qui doit être effectuée dans le poste de travail considéré correspond à celle prévue initialement et
- en cas de divergence, on signale celle ci au préposé au poste de travail pour qu'il n'effectue pas l'opération qui lui est missionnée.

Elle se rapporte également à l'installation.

L'invention sera bien comprise à l'aide de la description ci-après faite à titre d'exemple non limitatif en regard du dessin ci-annexé qui représente schématiquement :

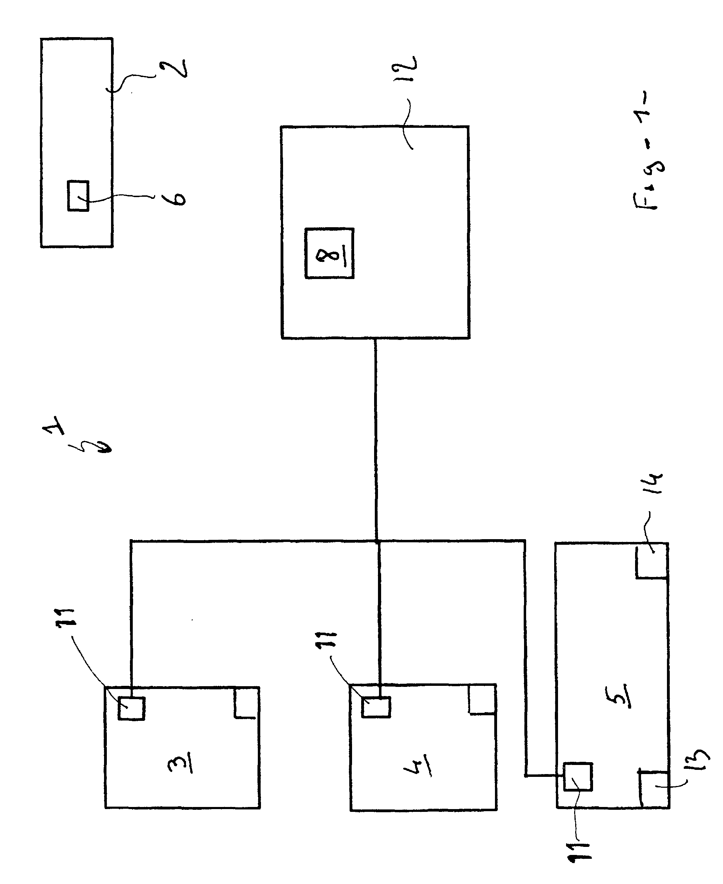

- figure 1 : une installation de recyclage de véhicules,

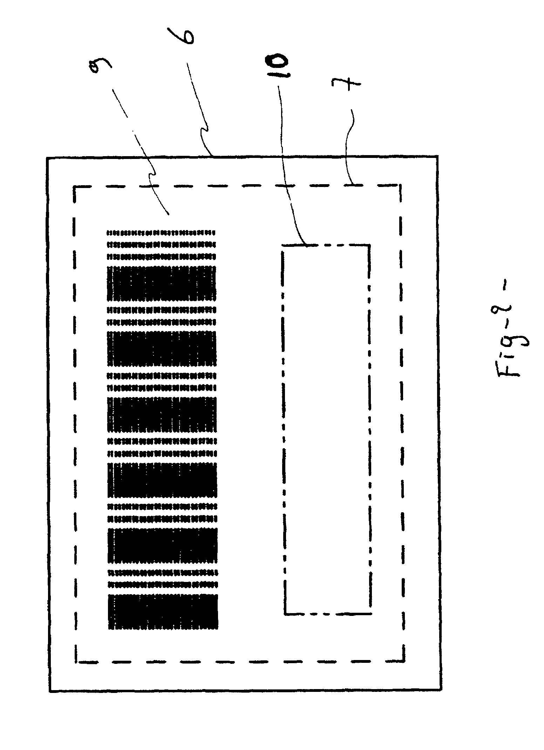

- figure 2 : un détail de l'installation.

En se reportant au dessin, on voit une installation 1 pour le recyclage de véhicules 2 hors d'usage ou retirés de la circulation.

Cette installation comprend divers postes 3, 4, 5 de travail effectuant des tâches différentes et, dont pour certaines de ces tâches, il est nécessaire d'affecter un ordre de passage chronologique.

Selon une caractéristique du procédé de recyclage des véhicules :
- préalablement à la prise en charge des véhicules en divers endroits, on crée au moins un moyen 6 matériel d'identification du véhicule, ce moyen 6 d'identification comprenant des moyens 7 de fixation sur le véhicule,
- en concomitance, on associe au moins indirectement à ce moyen 6 d'identification, une mémoire 8 répertoriant des données, d'une part, sur le véhicule et, d'autre part, sur les opérations à effectuer chronologiquement pour le recyclage,
- lors de la prise en charge d'un véhicule, d'une part, on fixe le ou les moyens d'identification sur le véhicule et, d'autre part, on incrémente la mémoire 8 associée pour indiquer l'étape suivante,
- à chaque poste de travail et avant chaque opération, on lit le moyen 6 d'identification,
- on lit la mémoire 8 associée pour identifier l'opération de recyclage prévue,
- on vérifie que l'opération qui doit être effectuée dans le poste de travail considéré correspond à celle prévue initialement et
- en cas de divergence, on signale celle ci au préposé au poste de travail pour qu'il n'effectue pas l'opération qui lui est missionnée.

Avantageusement, lorsqu'il s'agit d'une opération mettant en oeuvre une machine, s'il y a divergence, on interdit la mise en route de la machine et on lève cette interdiction lorsqu'un nouveau moyen d'identification auquel correspond une opération conforme est lue.

De préférence, on inscrit sur le moyen d'identification, d'une part, un code 9 lisible sans contact et, d'autre part, des références 10 du véhicule en caractères alphanumériques accessibles à tous.

On crée au moins deux moyens 6 d'identification et on fixe l'un des moyens d'identification sur le châssis du véhicule et l'autre sur le bloc moteur.

A chaque fois qu'une opération est effectuée, on inscrit dans la mémoire 8 la réalisation de cette opération.

La mémoire 8 peut être en partie portée par le support matériel 6.

Notamment, sur le châssis du véhicule, le moyen d'identification sera appliqué sur une partie facilement visible, telle l'un des montants du véhicule.

On peut éditer plusieurs autres moyens d'identification, chacun étant destiné à une pièce récupérée.

Les moyens pour la mise en oeuvre du procédé comprennent :
- au moins un moyen 6 matériel d'identification du véhicule, ce moyen d'identification comprenant des moyens 7 de fixation sur le véhicule,
- associée au moins indirectement à ce moyen 6 d'identification, une mémoire 8 répertoriant des données d'une part sur le véhicule et d'autre part sur les opérations à effectuer chronologiquement pour le recyclage,
- à chaque poste de travail, des moyens 11 de lecture du moyen d'identification,
- des moyens 12 pour vérifier que l'opération qui doit être effectuée dans le poste de travail considéré correspond à celle prévue initialement et
- des moyens 13 pour signaler une discordance entre l'opération prévue et l'opération devant être effectuée au poste de travail considéré.

Cette installation comprend en outre des moyens 14 pour immobiliser la machine du poste de travail, telle un broyeur, si une discordance telle qu'évoquée plus haut est constatée.

Le moyen 6 d'identification comprend, d'une part, un code lisible sans contact et, d'autre part, des références au véhicule en caractères alphanumériques accessibles à tous.

On peut aussi utiliser par exemple un code barre.

Le double étiquetage est prévu pour pallier à une dégradation lors des différentes manipulations.

## Revendications

1. Procédé de recyclage des véhicules automobiles hors d'usage dans une installation comprenant divers postes (3, 4, 5) de travail effectuant des tâches différentes et dont, pour certaines de ces tâches, il est nécessaire d'affecter un ordre de passage chronologique,
ce procédé étant **CARACTERISE en ce que** :
- préalablement à la prise en charge des véhicules en divers endroits, on crée au moins un moyen (6) matériel d'identification du véhicule, ce moyen (6) d'identification comprenant des moyens (7) de fixation sur le véhicule,
- en concomitance, on associe au moins indirectement à ce moyen (6) d'identification, une mémoire (8) répertoriant des données, d'une part, sur le véhicule et, d'autre part, sur les opérations à effectuer chronologiquement pour le recyclage,
- lors de la prise en charge d'un véhicule, d'une part, on fixe le ou les moyens d'identification sur le véhicule et, d'autre part, on incrémente la mémoire (8) associée pour indiquer l'étape suivante,
- à chaque poste de travail et avant chaque opération, on lit le moyen (6) d'identification,
- on lit la mémoire (8) associée pour identifier l'opération de recyclage prévue,
- on vérifie que l'opération qui doit être effectuée dans le poste de travail considérée correspond à celle prévue initialement et
- en cas de divergence, on signale celle ci au préposé au poste de travail pour qu'il n'effectue pas l'opération qui lui est missionnée.

2. Procédé selon la revendication 1 **caractérisé en ce que**, lorsqu'il s'agit d'une opération mettant en oeuvre une machine, s'il y a divergence, on interdit la mise en route de la machine et on lève cette interdiction lorsqu'un nouveau moyen d'identification auquel correspond une opération conforme est lue.

3. Procédé selon la revendication 1 **caractérisé en ce qu'**on inscrit sur le moyen d'identification, d'une part, un code (9) lisible sans contact et, d'autre part, des références (10) du véhicule en caractères alphanumériques accessibles à tous.

4. Procédé selon la revendication 1 **caractérisé en ce qu'**on crée au moins deux moyens (8) d'identification et on fixe l'un des moyens d'identification sur le châssis du véhicule et l'autre sur le bloc moteur.

5. Installation de recyclage **caractérisée en ce qu'**elle comprend :
- au moins un moyen (6) matériel d'identification du véhicule, ce moyen d'identification comprenant des moyens (7) de fixation sur le véhicule,
- associée au moins indirectement à ce moyen (6) d'identification, une mémoire (8) répertoriant des données d'une part sur le véhicule et d'autre part sur les opérations à effectuer chronologiquement pour le recyclage,
- à chaque poste de travail, des moyens (11) de lecture du moyen d'identification,
- des moyens (12) pour vérifier que l'opération qui doit être effectuée dans le poste de travail considéré correspond à celle prévue initialement et
- des moyens (13) pour signaler une discordance entre l'opération prévue et l'opération devant être effectuée au poste de travail considéré.

6. Installation de recyclage selon la revendication 5 **caractérisée en ce qu'**elle comprend des moyens (14) pour immobiliser la machine du poste de travail si une discordance entre l'opération prévue et l'opération devant être effectuée est constatée.

7. Installation de recyclage selon la revendication 5 **caractérisée en ce que** le moyen (6) d'identification comprend, d'une part, un code lisible sans contact et, d'autre part, des références au véhicule en caractères alphanumériques accessibles à tous.

## Patentansprüche

1. Verfahren zur Wiederaufbereitung von stillgelegten Kraftfahrzeugen in einer Anlage, welche verschiedene Arbeitsstationen (3, 4, 5) umfasst, an denen unterschiedliche Aufgaben ausgeführt werden und denen zur Ausführung bestimmter Funktionen unter diesen Aufgaben eine zeitlich geordnete Durchlaufordnung zugeordnet werden muss,
**dadurch GEKENNZEICHNET, dass**:
- vor der Aufnahme von Fahrzeugen an verschiedenen Stellen mindestens ein Mittel (6) als Identifizierungsmittel für das Fahrzeug erstellt wird, wobei das Identifizierungsmittel (6) Mittel (7) zur Befestigung auf dem Fahrzeug aufweist,
- gleichzeitig zumindest indirekt diesem Identifizierungsmittel ein Speicher (8) zugeordnet wird, in welchem zum einen Daten zum Fahrzeug und zum anderen Daten zu den für die Wiederaufbereitung in zeitlicher Abfolge auszuführenden Arbeitsgängen aufgelistet sind,
- während der Aufnahme eines Fahrzeugs zum einen das bzw. die Identifiziermittel auf dem Fahrzeug befestigt wird bzw. werden und zum anderen der zugeordnete Speicher (8) zur Angabe des folgenden Schritts weitergeschaltet wird,
- an jeder Arbeitsstation und vor jedem Arbeitsgang das Identifiziermittel (8) abgelesen wird,
- der zugeordnete Speicher (8) zur Identifizierung des vorgesehenen Arbeitsgangs für die Wiederaufarbeitung ausgelesen wird,
- nachgeprüft wird, ob der an der jeweiligen Arbeitsstation auszuführende Arbeitsgang dem ursprünglich vorgesehenen Arbeitsgang entspricht, und
- bei Abweichung Anzeigen dieser Abweichung an den Maschinenführer an dieser Arbeitsstation, damit dieser den ihm aufgetragenen Arbeitsvorgang nicht ausführt.

2. Verfahren nach Anspruch 1, **dadurch gekennzeichnet, dass** dann, wenn es sich um einen Arbeitsgang handelt, bei dem eine Maschine zum Einsatz kommt, bei einer Abweichung die Inbetriebnahme der Maschine gesperrt und diese Sperrung erst dann aufgehoben wird, wenn ein neues Identifiziermittel gelesen wird, dem ein entsprechender Arbeitsgang entspricht.

3. Verfahren nach Anspruch 1, **dadurch gekennzeichnet, dass** auf das Identifiziermittel zum einen eine berührungsfrei lesbare Kodierung (9) und zum anderen Bezugsnummem (10) für das Fahrzeug in alphanumerischen Zeichen, die allen zugänglich sind, geschrieben werden.

4. Verfahren nach Anspruch 1, **dadurch gekennzeichnet, dass** mindestens zwei Identifiziermittel (8) gebildet werden und eines der Identifiziermittel auf dem Fahrzeugrahmen und das andere auf dem Motorblock angebracht werden.

5. Anlage zur Wiederaufbereitung, **dadurch gekennzeichnet, dass** sie folgendes umfasst:
- mindestens ein Mittel (6) als Identifizierungsmittel für das Fahrzeug, wobei das Identifizierungsmittel (6) Mittel (7) zur Befestigung auf dem Fahrzeug aufweist,
- einen diesem Identifizierungsmittel zumindest indirekt zugeordneten Speicher (8), in welchem zum einen Daten zum Fahrzeug und zum anderen Daten zu den für die Wiederaufbereitung in zeitlicher Abfolge auszuführenden Arbeitsgängen aufgelistet sind,
- Leseeinrichtungen (11) zum Lesen des Identifizierungsmittels an jeder Arbeitsstation,
- Einrichtungen (12) zur Nachprüfung, ob der an der jeweiligen Arbeitsstation auszuführende Arbeitsgang dem ursprünglich vorgesehenen Arbeitsgang entspricht, und
- Einrichtungen (13) zum Anzeigen einer Nichtübereinstimmung zwischen dem vorgesehenen Arbeitsgang und dem Arbeitsgang, der an der jeweiligen Arbeitsstation auszuführen ist.

6. Wiederaufbereitungsanlage nach Anspruch 5, **dadurch gekennzeichnet, dass** sie Einrichtungen zum Feststellen der Maschine an der Arbeitsstation aufweist, wenn zwischen dem vorgesehenen Arbeitsgang und dem auszuführenden Arbeitsgang Nichtübereinstimmung festgestellt wird.

7. Wiederaufbereitungsanlage nach Anspruch 5, **dadurch gekennzeichnet, dass** das Identifiziermittel (6) einerseits eine berührungsfrei lesbare Kodierung und andererseits Bezugsnummern (10) für das Fahrzeug in alphanumerischen Zeichen, die allen zugänglich sind, umfasst.

## Claims

1. A process for recycling out-of-use motor vehicles in an installation comprising a plurality of work stations (3, 4, 5) performing different tasks and wherein, for certain of these tasks, it is necessary to assign a chronological sequence of operation,
this process being **characterised in that**:
- prior to the collection of the vehicles from various locations, at least one material means (6) for identification of the vehicle is produced, this identification means (6) comprising means (7) for fixing to the vehicle,
- concomitantly, a memory (8) listing data relating on the one hand to the vehicle and on the other hand to the recycling operations to be carried out chronologically is associated at least indirectly with said identification means (6),
- at the time of the collection of a vehicle, on the one hand the identification means is/are fixed to the vehicle and on the other hand the associated memory (8) is incremented to indicate the next step,
- at each work station and before each operation, the identification means (6) is read,
- the associated memory (8) is read to identify the specified recycling operation,
- it is verified that the operation which has to be carried out at the work station in question corresponds to that initially specified, and
- in the event of divergence, this is signalled to the employee at the work station so that he does not carry out the operation to which he has been assigned.

2. A process according to claim 1, **characterised in that**, when the operation in question utilises a machine and there is a divergence, the start-up of the machine is inhibited and this inhibition is lifted when a new identification means corresponding to a matching operation is read.

3. A process according to claim 1, **characterised in that** the identification means is inscribed on the one hand with a contactlessly readable code (9) and on the other hand with vehicle references (10) in alpha-numeric characters accessible to everyone.

4. A process according to claim 1, **characterised in that** at least two identification means (8) are produced, and one of the identification means is fixed to the chassis of the vehicle and the other to the engine block.

5. A recycling installation, **characterised in that** it comprises:
- at least one material means (6) for identification of the vehicle, this identification means comprising means (7) for fixing to the vehicle,
- a memory (8) listing data relating on the one hand to the vehicle and on the other hand to the recycling operations to be carried out chronologically and associated at least indirectly with the identification means (6),
- means (11) for reading the identification means at each work station,
- means (12) for verifying that the operation which has to be carried out at the work station in question corresponds to that initially specified, and
- means (13) for signalling non-correspondence between the specified operation and the operation having to be carried out at the work station in question.

6. A recycling installation according to claim 5, **characterised in that** it comprises means (14) for immobilising the machine at the work station if non-correspondence is established between the specified operation and the operation having to be carried out.

7. A recycling installation according to claim 5, **characterised in that** the identification means (6) comprises on the one hand a contactlessly readable code and on the other hand vehicle references in alpha-numeric characters accessible to everyone.
